# EUROPEAN PATENT SPECIFICATION

(11) **EP 3 663 150 B1**
(45) Date of publication and mention of the grant of the patent: **08.02.2023**
(21) Application number: 18210064.4
(22) Date of filing: 04.12.2018
(51) Int. Cl.: B60T 17/22

(54) **METHOD FOR DETERMINING A RESPONSE TIME PARAMETER OF A BRAKE CHAMBER OF A BRAKE SYSTEM FOR A VEHICLE, METHOD FOR CONTROLLING A BRAKE SYSTEM FOR A VEHICLE AND BRAKE SYSTEM FOR A VEHICLE**
VERFAHREN ZUR BESTIMMUNG EINES REAKTIONSZEITPARAMETERS EINES BREMSZYLINDERS EINES BREMSSYSTEMS FÜR EIN FAHRZEUG, VERFAHREN ZUR STEUERUNG EINES BREMSSYSTEMS FÜR EIN FAHRZEUG UND BREMSSYSTEM FÜR EIN FAHRZEUG
PROCÉDÉ POUR DÉTERMINER UN PARAMÈTRE DE TEMPS DE RÉPONSE D'UNE CHAMBRE DE FREIN D'UN SYSTÈME DE FREINAGE POUR UN VÉHICULE, PROCÉDÉ DE COMMANDE D'UN SYSTÈME DE FREINAGE POUR UN VÉHICULE ET SYSTÈME DE FREINAGE POUR UN VÉHICULE

(43) Date of publication of application: 10.06.2020
(73) Proprietor: KNORR-BREMSE Systeme für Nutzfahrzeuge GmbH, 80809 München (DE)
(72) Inventor: Bencsik, Gergely, 1078 Budapest (HU)

(56) References cited:
- EP-A2- 0 733 531
- US-A- 5 788 337

## Description

The present invention relates to a method for determining a response time parameter of a brake chamber of a brake system for a vehicle, to a method for controlling a brake system for a vehicle, to a controller and to a brake system for a vehicle.

Brake pressure in a vehicle may have a characteristic response time or delay when reacting to pressure changes, and it may be controlled by an electronic pressure modulator (EPM). This response time may vary with brake chamber size and pipe diameter and length. Since it is desirable for this response time to be known, it may be estimated based on parametric simulations, or it may be considered as a fixed value during development. Conventionally, the response time of a brake chamber may not be known, and it may vary from vehicle to vehicle. Actual brake pressure, in a dynamic sense, may also not be known conventionally.

In EP 0 733 531 A2, the distribution of available power to the brakes is carried out in proportion to the response power of the brakes. The transient value of the response power of at least one of the brakes is determined during at least one brake application, and is taken as a basis for the distribution of power. To determine the transient value of response power, the necessary steps include recording the vehicle deceleration as the base deceleration, supplying power to the respective brake, recording the vehicle deceleration as the test deceleration, and comparing the base and test decelerations.

Against this background, it is the object of the present invention to provide an improved method for determining a response time parameter of a brake chamber of a brake system for a vehicle, an improved method for controlling a brake system for a vehicle, an improved controller and an improved brake system for a vehicle.

This object is achieved by a method for determining a response time parameter of a brake chamber of a brake system for a vehicle according to independent claim 1, by a method for controlling a brake system for a vehicle according to claim 7, by a controller according to claim 8 and by a brake system for a vehicle according to claim 9.

According to embodiments, for example, brake chamber dynamics data may be determined by observing relay valve pressure. In particular, a brake chamber response time or delay may be determined by observing pressure gradients in a pressure signal of an electronic pressure modulator of a vehicle brake system. Herein, a defined relationship between a course or gradient of the pressure signal as measured at the electronic pressure modulator and an actual pressure in the brake chamber may be utilized.

Advantageously, according to embodiments, knowledge of brake chamber response time helps pressure control adaptation in order to guarantee control loop response time with regards to brake pressure. Furthermore, knowledge of brake chamber dynamics, particularly brake chamber response time, helps ABS performance, with the potential to decrease brake distance, because knowledge of actual brake pressure peaks can help ABS better detect slip-threshold pressure. It may otherwise not be possible to measure and tune this parameter without external sensors on the brake chamber, but according to embodiments it may be a self-configuration feature, or it may work like continuous online learning. Thus, pressure control performance may be ensured with regard to brake chamber pressure, not local pressure of the electronic pressure modulator, without external tuning. Therefore, according to embodiments, improvements in brake control, ABS and pressure control may be provided for a vehicle.

Also, tedious procedures for finding appropriate tuning or simulations for brake chamber dynamics can be avoided, without simply leaving the parameter constant for all types of vehicles and brake systems. For example, this also makes ABS behavior more predictable and reproducible. Moreover, an electronic pressure modulator, which may be sensitive to brake chamber size, may be operated reliably to provide safe braking functions, and variability of pressure control performance may be minimized or eliminated. Pressure control may be made more robust with regard to output parameters, such as brake chamber size, tubing the like. In order to make pressure control robust and to ensure pressure control performance, brake chamber parameters may be identified according to embodiments.

A method for determining a response time parameter of a brake chamber of a brake system for a vehicle, wherein the brake system comprises an electronic pressure modulator configured to modulate pressure in the brake chamber and a solenoid valve for the brake chamber, comprises:
detecting an end of a fallback slope of a pressure signal as measured at the electronic pressure modulator after a pulse of the solenoid valve; and
setting the response time parameter of the brake chamber depending on the detected end of the fallback slope.

The vehicle may be a utility vehicle or commercial vehicle, for example a truck, bus or the like. The method or the steps of the method may be executed using a controller. The solenoid valve may be part of or combined with the electronic pressure modulator. The electronic pressure modulator may comprise the solenoid valve. The end of the fallback slope corresponds to a state in which pressure represented by the pressure signal as measured at the electronic pressure modulator and actual brake chamber pressure are equal. At the end of the fallback slope the pressure signal as measured at the electronic pressure modulator may show a constant or near-constant pressure gradient, or it may revert direction due to noise or disturbances. In the step of setting, the response time parameter may be updated. Additionally or alternatively, in the step of setting, the response time parameter may be maintained or changed. The brake system may also comprise a sensor for measuring the pressure signal at the electronic pressure modulator. The brake system may further comprise a relay valve. The relay valve may function as a pneumatic amplification mechanism. The relay valve may be a mechanism that controls pressure and air-flow output, and is controlled by pressure input. The solenoid valve may drive the relay valve. The relay valve may have a feedback orifice. The feedback orifice may be an opening connecting control and output chambers of the relay valve. The relay valve may have a piston inside. When the solenoid valve is open, the piston may keep opening more and more. When the solenoid valve closes, there may be the pressure peak, and the piston may start closing again. The piston of the relay valve may close at the end of the fallback slope, later than the solenoid valve. The electro-pneumatic modulator may be defined as an electronically controlled relay valve. Control pressure of the relay valve may not be an external input, but instead the control pressure may be created by solenoid valves. An output of the relay valve may be measured by means of a sensor, and a feedback loop may be created, wherein the solenoid valves may keep increasing or decreasing control pressure until a pre-defined output pressure is achieved. A pulse of the solenoid valve may be a time interval or duration between opening and closing of the solenoid valve that provides the input to the relay. An end of the pulse of the solenoid valve corresponds to a peak in the pressure signal as measured at the electronic pressure modulator.

According to an embodiment, in the step of detecting the end of the fallback slope may be detected by searching for a change of sign in a slope or derivative of the pressure signal after the pulse of the solenoid valve. The change of sign may include a positive sign, a negative sign and zero. Such an embodiment offers the advantage that the end of the fallback slope can be identified in a reliable and effective way.

Also, according to an embodiment, the method may comprise a step of computing a response time using a pulse duration of the solenoid valve and a fallback duration from the end of the pulse of the solenoid valve to the end of the fallback slope. In the step of setting the response time may be set as the response time parameter. Such an embodiment offers the advantage that meaningful dynamic properties of the brake chamber can be determined in an easy and reliable manner.

Furthermore, according to an embodiment, in the step of setting a time constant used in brake chamber simulation may be set as the response time parameter as a function of a pulse duration of the solenoid valve and a fallback duration from the end of the pulse of the solenoid valve to the end of the fallback slope. Such an embodiment offers the advantage that simulations of brake chamber dynamics and other properties can be made more accurate.

According to an embodiment, the method may comprise a step of comparing the pressure signal as measured at the electronic pressure modulator at the end of the fallback slope to a model pressure value of a brake pressure simulation at the end of the fallback slope, in order to obtain a pressure difference. The pressure difference may indicate that the pressure signal and the model pressure value are equal or different at the end of the fallback slope. Such an embodiment offers the advantage that the detected end of the fallback slope can be used as a meaningful point in time for a comparison between measured values and model values, giving rise to a simple and quick test of the model or simulations.

In this context, according to an embodiment, in the step of setting a time constant used in the brake pressure simulation may be adjusted depending on the pressure difference, in order to set the response time parameter. When being adjusted, the time constant may be incremented, decremented or maintained at the previous level or value. Such an embodiment offers the advantage that the brake pressure simulation can be enhanced in an easy and reliable manner by updates in case of a pressure difference obtained in the step of comparing.

A method for controlling a brake system for a vehicle, wherein the brake system comprises a brake chamber, an electronic pressure modulator configured to modulate pressure in the brake chamber and a solenoid valve for the brake chamber, comprises:
determining the response time parameter of the brake chamber pursuant to an embodiment of the aforementioned method; and
modulating pressure for the brake chamber depending on the response time parameter.

The method or the steps of the method may be executed using a controller. Thus, the method may be executed to control an embodiment of a subsequently mentioned brake system.

The approach presented here also provides a controller configured to execute, control or perform, in corresponding units, the steps of a variant of a method presented here. The object underlying the invention may be achieved quickly and efficiently also by this embodiment of the invention in form of a controller.

To this end, the controller may comprise at least one processing unit for processing signals or data, at least one storage unit for storing signals or data, at least one interface to the sensor or an actuator reading sensor signals from the sensor or for outputting control signals to the actuator and/or at least one communication interface for reading or outputting data embedded in a communication protocol. The processing unit may, for example, be a signal processor, a microcontroller or the like, wherein the storage unit may be a flash memory, an EPROM, EEPROM or a magnetic storage unit. The communication interface may be configured to read or output data in a wireless and/or wired manner, wherein a communication interface capable of reading or outputting data via a line may read this data electrically or optically from a corresponding data transmission line or output the same into a corresponding data transmission line, for example.

A controller may be a technical device processing sensor signals and outputting control and/or data signals depending thereon. The controller may comprise an interface, which may be configured as hardware and/or software. If configured as hardware, the interfaces may, for example, be part of a so-called system ASIC including various functions of the controller. However, it is also possible for the interfaces to be discrete integrated circuits or at least partly consist of discrete components. If configured as software, the interfaces may be software modules present on a microcontroller along with other software modules, for example.

What is also advantageous is a computer program product or to program with program code which may be stored on a machine-readable carrier or storage medium, such as a semiconductor memory, a hard-drive memory or an optical memory, and is used for executing, performing/controlling the steps of the method according to one of the embodiments previously described, in particular when the program product or program is executed on a computer or a device.

A brake system for a vehicle comprises:
a brake chamber;
an electronic pressure modulator configured to modulate pressure in the brake chamber;
a solenoid valve for the brake chamber; and
a controller configured to execute, control or perform, in corresponding units, the steps of an embodiment of the aforementioned method for controlling, wherein the controller is communicatively connected to the electronic pressure modulator and to the solenoid valve.

The brake system may comprise an embodiment of the aforementioned controller or a similar controller. The solenoid valve may be part of or combined with the electronic pressure modulator.

Embodiments of the approach presented here shall be explained in greater detail in the subsequent description with reference to the figures, wherein:
Fig. 1 shows a schematic illustration of a vehicle comprising a brake system according to an embodiment of the present invention;
Fig. 2 shows a flowchart of a method for determining according to an embodiment of the present invention;
Fig. 3 shows a flowchart of a method for controlling according to an embodiment of the present invention;
Fig. 4 shows a schematic pressure diagram according to an embodiment of the present invention;
Fig. 5 shows a schematic pressure diagram according to an embodiment of the present invention;
Fig. 6 shows a schematic pressure diagram according to an embodiment of the present invention; and
Fig. 7 shows a schematic pressure diagram according to an embodiment of the present invention.

In the following description of advantageous embodiments of the present invention, the same or similar reference numerals shall be used for the elements depicted in the various figures and acting in a similar way, wherein repeated description of these elements shall be omitted.

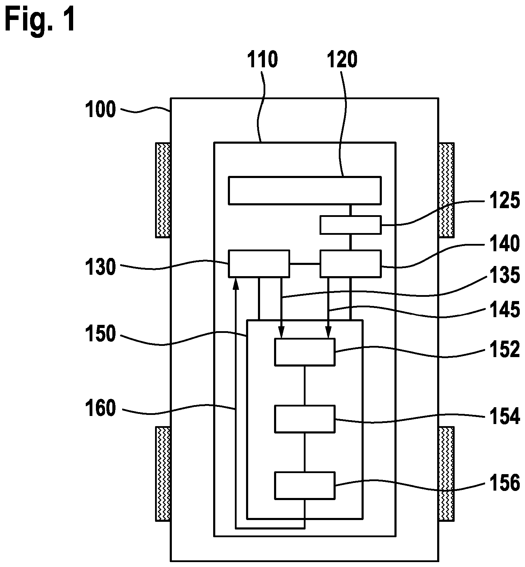

Fig. 1 shows a schematic illustration of a vehicle 100 comprising a brake system 110 according to an embodiment of the present invention. The vehicle 100 is a utility vehicle or commercial vehicle, such as a truck. The brake system 110 comprises at least one brake chamber 120, an electronic pressure modulator 130, a solenoid valve 140 and a controller 150.

The electronic pressure modulator 130 is configured to modulate pressure in the brake chamber 120. The electronic pressure modulator 130 is fluidically and/or communicatively connected to the solenoid valve 140. The solenoid valve 140 is associated with a relay valve 125 for the brake chamber 120. More specifically, the relay valve 125 is fluidically connected to the brake chamber 120. Furthermore, even though not shown in Fig. 1, the relay valve 125 is connected into a fluid line between the brake chamber 120 and a reservoir for pressurized fluid. The controller 150 is communicatively connected at least to the electronic pressure modulator 130 and to the solenoid valve 140.

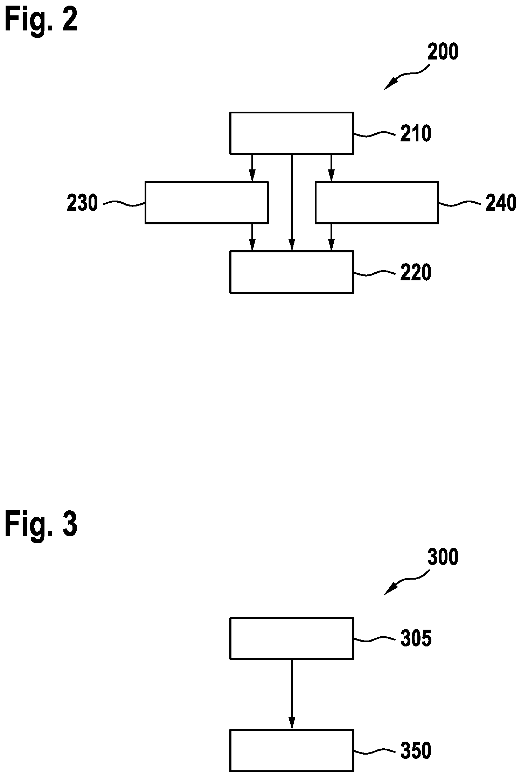

The controller 150 is configured to control the brake system 110. To this end, the controller 150 comprises means or units configured to execute, control or perform steps of a method for controlling a brake system as described in Fig. 3 or a similar method. The controller 150 also comprises means or units configured to execute, control or perform steps of a method for determining a response time parameter of the brake chamber 120 as described in Fig. 2 or a similar method.

According to the embodiment shown here, the controller 150 comprises means 152 for detecting, means 154 for setting and means 156 for modulating. The controller 150 or the means for detecting 152 is configured to read or receive a pressure signal 135 from the electronic pressure modulator 130. The pressure signal 135 represents fluid pressure measured at the electronic pressure modulator. Furthermore, the controller 150 or the means for detecting 152 is configured to read or receive a pulse signal 145 from the solenoid valve 140. The pulse signal 145 represents information on a pulse of the solenoid valve 140. The information on the pulse of the solenoid valve 140 may comprise an opening time of the solenoid valve 140, a closing time of the solenoid valve 140 and/or a pulse duration or time interval between opening and closing of the solenoid valve 140.

The means 152 for detecting is configured to detect an end of a fallback slope of the pressure signal 135 after a pulse of the solenoid valve 140. Furthermore, the means 152 for detecting is configured to pass on information the end of the fallback slope of the pressure signal 135 to the means 154 for setting. The means 154 for setting is configured to set the response time parameter of the brake chamber 120 depending on the detected end of the fallback slope. The means 154 for setting also is configured to pass on information on the set response time parameter to the means 156 for modulating. The means 156 for modulating is configured to modulate pressure for the brake chamber 120 depending on the response time parameter. To this end, the means 156 for modulating is configured to generate a control signal 160 depending on the response time parameter and output the control signal 160 to the electronic pressure modulator 130. The control signal 160 is suitable for driving the electronic pressure modulator 130 so as to modulate pressure for the brake chamber 120.

The brake system 110 may also comprise a sensor for measuring the pressure signal 135 at the electronic pressure modulator 130, even though this is not explicitly shown in Fig. 1. According to an embodiment, the controller 150 may be distinct from the brake system 110, for example realized as or in another controller of the vehicle 100. According to another embodiment, the controller 150 and the electronic pressure modulator 130 may be combined. According to yet another embodiment, the electronic pressure modulator and the solenoid valve 140 may be combined. The electronic pressure modulator 130 may then comprise a circuit board, at least one solenoid valve and electronics.

Fig. 2 shows a flowchart of a method 200 for determining according to an embodiment of the present invention. The method 200 is executable for determining a response time parameter of a brake chamber of a brake system for a vehicle. The brake system corresponds to or is similar to the brake system as described with reference to Fig. 1. The method 200 or the steps of the method 200 may be executed using the controller as described with reference to Fig. 1 or a similar controller.

In a step 210 of detecting, an end of a fallback slope of a pressure signal as measured at the electronic pressure modulator is detected after a pulse of the solenoid valve. In particular, the end of the fallback slope is detected by searching for a change of sign in a slope or derivative of the pressure signal after the pulse of the solenoid valve in the step 210 of detecting. Subsequently, in a step 220 of setting, the response time parameter of the brake chamber is set depending on the detected end of the fallback slope.

According to an embodiment, the method 200 for determining comprises a step 230 of computing a response time using a pulse duration of the solenoid valve and a fallback duration from the end of the pulse of the solenoid valve to the end of the fallback slope. Herein, the computed response time is set as the response time parameter in the step 220 of setting.

According to a further embodiment, in the step 220 setting, a time constant used in brake chamber simulation is set as the response time parameter as a function of a pulse duration of the solenoid valve and a fallback duration from the end of the pulse of the solenoid valve to the end of the fallback slope.

Alternatively or additionally, the method 200 for determining comprises a step 240 of comparing the pressure signal as measured at the electronic pressure modulator at the end of the fallback slope to a model pressure value of a brake pressure simulation at the end of the fallback slope, in order to obtain a pressure difference. Herein, a time constant used in the brake pressure simulation is adjusted depending on the pressure difference the step 220 of setting, in order to set the response time parameter.

Fig. 3 shows a flowchart of a method 300 for controlling according to an embodiment of the present invention. The method 300 is executable for controlling a brake system for a vehicle. The brake system corresponds to or is similar to the brake system as described with reference to Fig. 1. The method 300 or the steps of the method 300 may be executed using the controller as described with reference to Fig. 1 or a similar controller.

In a step 305 of determining, the response time parameter of the brake chamber is determined by executing the method for determining as described with reference to Fig. 1 or a similar method. The step 305 of determining can be executed repeatedly, periodically or once. Subsequently, in a step 350 of modulating, pressure for the brake chamber is modulated depending on the response time parameter.

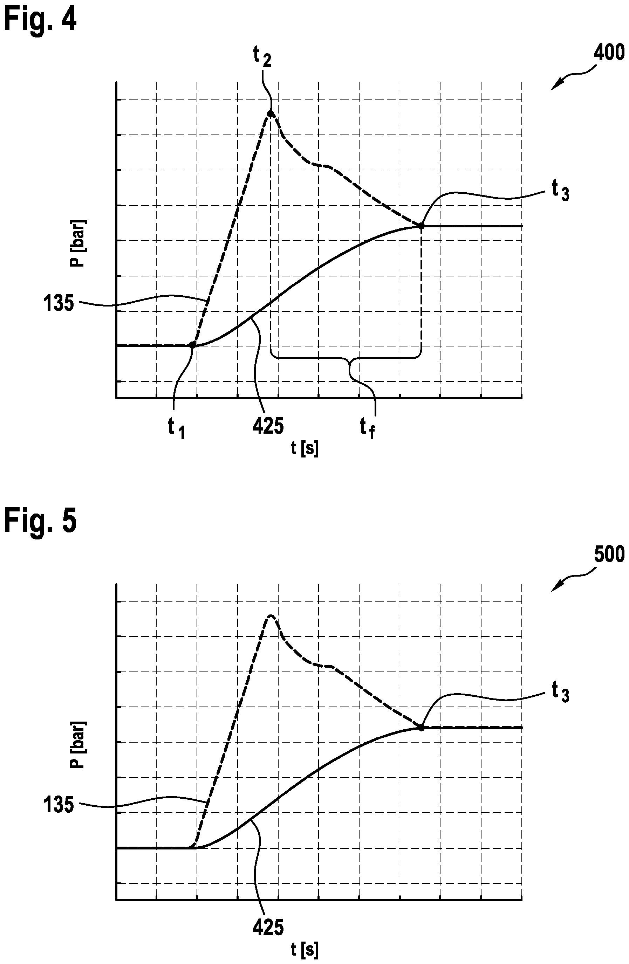

**Fig.** 4 shows a schematic pressure diagram 400 according to an embodiment of the present invention. In the pressure diagram 400, the time t is plotted on the abscissa in seconds, and the pressure P is plotted on the ordinate in bar. A first graph of the pressure diagram 400 represents the pressure signal 135 as described with reference to Fig. 1. The pressure signal 135 shows a pressure gradient as measured at the electronic pressure modulator of the brake system as described with reference to Fig. 1. A second graph of the pressure diagram 400 represents actual pressure 425 or simulated pressure 425 in the brake chamber of Fig. 1 or a similar brake chamber.

To a first time instant t₁, the pressure signal 135 and the actual pressure 425 have the same course and thus overlap. The first time instant t₁ corresponds to an opening of the solenoid valve of the brake system as described with reference to Fig. 1. In other words, the first time instant t₁ corresponds to a beginning of a pulse of the solenoid valve. Between the first time instant t₁ and a second time instant t₂, the pressure signal 135 has a greater rising slope than the actual pressure 425. The second time instant t₂ corresponds to a closing of the solenoid valve of the pressure modulator of the brake system as described with reference to Fig. 1. In other words, the second time instant t₂ corresponds to an end of the pulse of the solenoid valve. The second time instant t₂ marks a peak in the pressure signal 135. Between the second time instant t₂ and a third second time instant t₃, the pressure signal 135 has a falling slope, and the actual pressure 425 has a rising slope. The time interval between the second time instant t₂ and the third time instant t₃, corresponds to a fallback time t_{f} of the pressure signal 135. The third time instant t₃ represents the end of a fallback slope of the pressure signal 135. In particular, the third time instant t₃ corresponds to a state in which a pressure value of the pressure signal 135 is equal to the actual pressure 425. From the third time instant t₃ onward, both the pressure signal 135 and the actual pressure 425 level off and have the same overlapping course again.

**Fig. 5** shows a schematic pressure diagram 500 according to an embodiment of the present invention. The pressure diagram 500 corresponds to the pressure diagram of Fig. 4 except that out of the time-related reference signs only the third time instant t₃ is indicated. The pressure diagram 500 relates to a brake chamber which is characterized as a large-sized chamber.

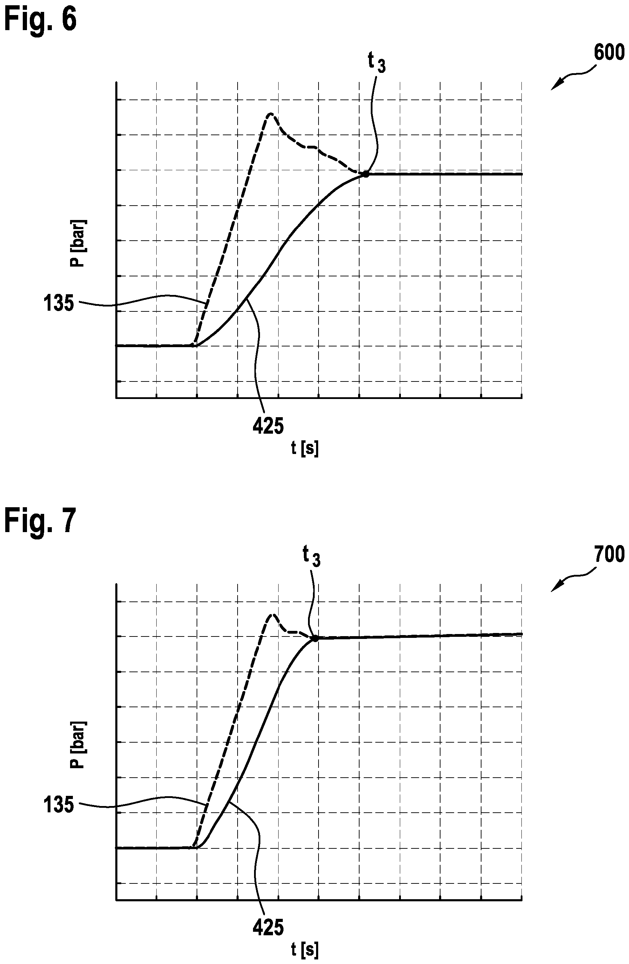

**Fig. 6** shows a schematic pressure diagram 600 according to an embodiment of the present invention. The pressure diagram 600 corresponds to the pressure diagram of Fig. 5 except that the pressure diagram 600 relates to a brake chamber which is characterized as a medium-sized chamber. The fallback time in Fig. 6 is shorter than in Fig. 4 or Fig. 5.

**Fig. 7** shows a schematic pressure diagram 700 according to an embodiment of the present invention. The pressure diagram 700 corresponds to the pressure diagram of Fig. 5 or Fig. 6 except that the pressure diagram 700 relates to a brake chamber which is characterized as a small -sized chamber. The fallback time in Fig. 7 is shorter than in Fig. 6.

With reference to the figures previously described, embodiments of the present invention shall be summarized and/or briefly presented in other words in the following.

Each pulse of the solenoid valve 140 in the electronic pressure modulator 130 results in an overshoot-like behavior of the pressure signal 135, which is characterized by the system-level environment. At the end of the pulse of the solenoid valve 140, the measured pressure or local pressure in the electronic pressure modulator 130 reaches its peak, as shown in the pressure signal 135, and then starts falling back because of a feedback orifice in a control piston. This fallback or fallback slope is characterized by a more or less constant pressure gradient, and lasts until the actual pressure in the brake chamber 120 catches up with the pressure signal 135. The end of the fallback slope is detected in the local pressure signal 135, and it gives a point in time when the actual brake pressure in the brake chamber 120 can be regarded as equal to the value of the pressure signal 135. The end of the fallback slope is used to set or update responsetime parameters of the brake chamber 120.

The aforementioned details accommodate an explicit method and an implicit method. In the explicit method, after each pulse of the solenoid valve, the end of the fallback slope is detected by searching for a change in gradient direction, in particular a zero-crossing in the pressure derivative of the pressure signal 135. Furthermore, the time duration recorded as the fallback time t_{f} and the reaction or response time parameter of the brake chamber 120, (or example, a time constant of a PT1 used for brake chamber simulation, is updated as a function of the pulse duration and the fallback duration. In the implicit method, the end of the fallback slope also is detected after each pulse. Furthermore, there is a simulation of the actual brake pressure running in parallel. When the end-of-slope is detected, the actual brake pressure should be equal to the local or measured pressure as represented by pressure signal 135. If it is higher, or lower, the time-constant used for simulation is incremented or decremented accordingly.

### REFERENCE NUMERAL LIST

- 100: vehicle
- 110: brake system
- 120: brake chamber
- 125: relay valve
- 130: electronic pressure modulator
- 135: pressure signal
- 140: solenoid valve
- 145: pulse signal
- 150: controller
- 152: means for detecting
- 154: means for setting
- 156: means for modulating
- 160: control signal
- 200: method for determining
- 210: step of detecting
- 220: step of setting
- 230: step of computing
- 240: step of comparing
- 300: method for controlling
- 305: step of determining
- 350: step of modulating
- 400: pressure diagram
- P: pressure
- t: time
- t₁: first time instant
- t₂: second time instant
- t₃: third time instant
- t_{f}: fallback time
- 425: pressure in the brake chamber
- 500: pressure diagram
- 600: pressure diagram
- 700: pressure diagram

## Claims

1. Method (200) for determining a response time parameter of a brake chamber (120) of a brake system (110) for a vehicle (100), wherein the brake system (110) comprises an electronic pressure modulator (130) configured to modulate pressure in the brake chamber (120) and a solenoid valve (140) for the brake chamber (120), wherein the method (200) comprises:
detecting (210) an end (t₃) of a fallback slope of a pressure signal (135) as measured at the electronic pressure modulator (130) after a pulse of the solenoid valve (140), wherein the end (t₃) of the fallback slope corresponds to a state in which pressure represented by the pressure signal (135) as measured at the electronic pressure modulator (130) and actual brake chamber (120) pressure are equal, wherein an end of the pulse of the solenoid valve (140) corresponds to a peak in the pressure signal (135) as measured at the electronic pressure modulator (130); and
setting (220) the response time parameter of the brake chamber (120) depending on the detected end (t₃) of the fallback slope.

2. Method (200) according to claim 1, wherein in the step (210) of detecting the end (t₃) of the fallback slope is detected by searching for a change of sign in a slope or derivative of the pressure signal (135) after the pulse of the solenoid valve (140).

3. Method (200) according to one of the preceding claims, comprising a step (230) of computing a response time using a pulse duration (t₂-t₁) of the solenoid valve (140) and a fallback duration (t_{f}) from the end (t₂) of the pulse of the solenoid valve (140) to the end (t₃) of the fallback slope, wherein in the step (220) of setting the response time is set as the response time parameter.

4. Method (200) according to one of the preceding claims, wherein in the step (220) of setting a time constant used in brake chamber simulation is set as the response time parameter as a function of a pulse duration (t₂-t₁) of the solenoid valve (140) and a fallback duration (t_{f}) from the end (t₂) of the pulse of the solenoid valve (140) to the end (t₃) of the fallback slope.

5. Method (200) according to one of the preceding claims, comprising a step (240) of comparing the pressure signal (135) as measured at the electronic pressure modulator (130) at the end (t₃) of the fallback slope to a model pressure value of a brake pressure simulation at the end (t₃) of the fallback slope, in order to obtain a pressure difference.

6. Method (200) according to claim 5, wherein in the step (220) of setting a time constant used in the brake pressure simulation is adjusted depending on the pressure difference, in order to set the response time parameter.

7. Method (300) for controlling a brake system (110) for a vehicle (100), wherein the brake system (110) comprises a brake chamber (120), an electronic pressure modulator (130) configured to modulate pressure in the brake chamber (120) and a solenoid valve (140) for the brake chamber (120), wherein the method (300) comprises:
determining (305) the response time parameter of the brake chamber (120) pursuant to the method (200) according to one of the preceding claims; and
modulating (350) pressure for the brake chamber (120) depending on the response time parameter.

8. Controller (150) configured to to execute, control or perform, in corresponding units (152, 154, 158), the steps of a method (200; 300) according to one of the preceding claims.

9. Brake system (110) for a vehicle (100), wherein the brake system (110) comprises:
a brake chamber (120);
an electronic pressure modulator (130) configured to modulate pressure in the brake chamber (120);
a solenoid valve (140) for the brake chamber (120); and
a controller (150) configured to execute, control or perform, in corresponding units (152, 154, 158), the steps of the method (300) according to claim 7, wherein the controller (150) is communicatively connected to the electronic pressure modulator (130) and to the solenoid valve (140).

## Patentansprüche

1. Verfahren (200) zum Bestimmen eines Reaktionszeitparameters einer Bremskammer (120) eines Bremssystems (110) für ein Fahrzeug (100), wobei das Bremssystem (110) einen elektronischen Druckmodulator (130), der dazu ausgelegt ist, einen Druck in der Bremskammer (120) zu modulieren, und ein Magnetventil (140) für die Bremskammer (120) umfasst, wobei das Verfahren (200) Folgendes umfasst:
Detektieren (210) eines Endes (t₃) einer Abfallflanke eines an dem elektronischen Druckmodulator (130) gemessenen Drucksignals (135) nach einem Impuls des Magnetventils (140), wobei das Ende (t₃) der Abfallflanke einem Zustand entspricht, in dem ein Druck, der durch das an dem elektronischen Druckmodulator (130) gemessene Drucksignal (135) dargestellt wird, und ein tatsächlicher Bremskammer(120)-Druck gleich sind, wobei ein Ende des Impulses des Magnetventils (140) einer Spitze in dem an dem elektronischen Druckmodulator (130) gemessenen Drucksignal (135) entspricht; und
Einstellen (220) des Reaktionszeitparameters der Bremskammer (120) in Abhängigkeit von dem detektierten Ende (t₃) der Abfallflanke.

2. Verfahren (200) nach Anspruch 1, wobei in dem Schritt (210) zum Detektieren das Ende (ta) der Abfallflanke durch Suchen nach einer Änderung eines Vorzeichens in einer Flanke oder einer Ableitung des Drucksignals (135) nach dem Impuls des Magnetventils (140) detektiert wird.

3. Verfahren (200) nach einem der vorhergehenden Ansprüche, umfassend einen Schritt (230) zum Berechnen einer Reaktionszeit unter Verwendung einer Impulsdauer (t₂-t₁) des Magnetventils (140) und einer Abfalldauer (t_{f}) von dem Ende (t₂) des Impulses des Magnetventils (140) zu dem Ende (t₃) der Abfallflanke, wobei in dem Schritt (220) zum Einstellen die Reaktionszeit als der Reaktionszeitparameter eingestellt wird.

4. Verfahren (200) nach einem der vorhergehenden Ansprüche, wobei in dem Schritt (220) zum Einstellen eine in einer Bremskammersimulation verwendete Zeitkonstante als der Reaktionszeitparameter als eine Funktion einer Impulsdauer (t₂-t₁) des Magnetventils (140) und einer Abfalldauer (t_{f}) von dem Ende (t₂) des Impulses des Magnetventils (140) zu dem Ende (t₃) der Abfallflanke eingestellt wird.

5. Verfahren (200) nach einem der vorhergehenden Ansprüche, umfassend einen Schritt (240) zum Vergleichen des an dem elektronischen Druckmodulator (130) gemessenen Drucksignals (135) an dem Ende (t₃) der Abfallflanke mit einem Modelldruckwert einer Bremsdrucksimulation an dem Ende (t₃) der Abfallflanke, um eine Druckdifferenz zu erhalten.

6. Verfahren (200) nach Anspruch 5, wobei in dem Schritt (220) zum Einstellen eine in der Bremsdrucksimulation verwendete Zeitkonstante in Abhängigkeit von der Druckdifferenz angepasst wird, um den Reaktionszeitparameter einzustellen.

7. Verfahren (300) zum Steuern eines Bremssystems (110) für ein Fahrzeug (100), wobei das Bremssystem (110) eine Bremskammer (120), einen elektronischen Druckmodulator (130), der dazu ausgelegt ist, einen Druck in der Bremskammer (120) zu modulieren, und ein Magnetventil (140) für die Bremskammer (120) umfasst, wobei das Verfahren (300) Folgendes umfasst:
Bestimmen (305) des Reaktionszeitparameters der Bremskammer (120) gemäß dem Verfahren (200) nach einem der vorhergehenden Ansprüche; und
Modulieren (350) eines Drucks für die Bremskammer (120) in Abhängigkeit von dem Reaktionszeitparameter.

8. Steuerung (150), die dazu ausgelegt ist, in entsprechenden Einheiten (152, 154, 158) die Schritte eines Verfahrens (200; 300) nach einem der vorhergehenden Ansprüche auszuführen, zu steuern oder durchzuführen.

9. Bremssystem (110) für ein Fahrzeug (100), wobei das Bremssystem (110) Folgendes umfasst:
eine Bremskammer (120);
einen elektronischen Druckmodulator (130), der dazu ausgelegt ist, einen Druck in der Bremskammer (120) zu modulieren;
ein Magnetventil (140) für die Bremskammer (120); und
eine Steuerung (150), die dazu ausgelegt ist, in entsprechenden Einheiten (152, 154, 158) die Schritte des Verfahrens (300) nach Anspruch 7 auszuführen, zu steuern oder durchzuführen, wobei die Steuerung (150) kommunikativ mit dem elektronischen Druckmodulator (130) und mit dem Magnetventil (140) verbunden ist.

## Revendications

1. Procédé (200) de détermination d'un paramètre de temps de réaction d'une chambre (120) de frein d'un système (110) de frein d'un véhicule (100), dans lequel le système (110) de frein comprend un modulateur (130) électronique de pression configuré pour moduler la pression dans la chambre (120) de frein et une électrovanne (140) pour la chambre (120) de frein, dans lequel le procédé (200) comprend :
détecter (210) une fin (t₃) d'une pente de retombée d'un signal (135) de pression, telle que mesurée au modulateur (130) électronique de pression, après une impulsion de l'électrovanne (140), dans lequel la fin (t₃) de la pente de retombée correspondant à un état dans lequel la pression représentée par le signal (135) de pression, telle que mesurée au modulateur (130) électronique de pression, et la pression réelle dans la chambre (120) de pression sont égales, dans lequel une fin de l'impulsion de l'électrovanne (140) correspond à une crête dans le signal (135) de pression, telle que mesurée au modulateur (130) électronique de pression ; et
fixer (220) le paramètre de temps de réaction de la chambre (120) de frein, en fonction de la fin (t₃) détectée de la pente de retombée.

2. Procédé (200) suivant la revendication 1, dans lequel, dans le stade (210) de détection, on détecte la fin (t₃) de la pente de retombée en recherchant un changement de signe dans la pente ou une dérivée du signal (135) de pression, après l'impulsion de l'électrovanne (140).

3. Procédé (200) suivant l'une des revendications précédentes, comprenant un stade (230) de calcul d'un temps de réaction en utilisant une durée (t₂ - t₁) d'impulsion de l'électrovanne (140) et une durée (t_{f}) de retombée allant de la fin (t₂) de l'impulsion de l'électrovanne (140) à la fin (t₃) de la pente de retombée, dans lequel, dans le stade (220) de fixation, on fixe le temps de réaction comme étant le paramètre de temps de réaction.

4. Procédé (200) suivant l'une des revendications précédentes, dans lequel, dans le stade (220) de fixation, on fixe une constante de temps utilisée dans une simulation de la chambre de frein comme paramètre de temps de réaction en fonction d'une durée (t₂ - t₁) d'impulsion de l'électrovanne (140) et d'une durée (t_{f}) de retombée allant de la fin (t₂) de l'impulsion de l'électrovanne (140) à la fin (t₃) de la pente de retombée.

5. Procédé (200) suivant l'une des revendications précédentes, comprenant un stade (240) de comparaison du signal (135) de pression telle que mesurée au modulateur (130) électronique de pression à la fin (t₃) de la pente de retombée à une valeur modèle de pression d'une simulation de pression de frein à la fin (t₃) de la pente de retombée, afin d'obtenir une différence de pression.

6. Procédé (200) suivant la revendication 5, dans lequel, dans le stade (220) de fixation, on règle une constante de temps utilisée dans la simulation de la pression de frein en fonction de la différence de pression, afin de fixer le paramètre de temps de réaction.

7. Procédé (300) de commande d'un système (110) de frein d'un véhicule (100), dans lequel le système (110) de frein comprend une chambre (120) de frein, un modulateur (130) électronique de pression configuré pour moduler la pression dans la chambre (120) de frein et une électrovanne (140) pour la chambre (120) de frein, dans lequel le procédé (300) comprend :
déterminer (305) le paramètre de temps de réaction de la chambre (120) de frein, conformément au procédé (200) suivant l'une des revendications précédentes ; et
moduler (350) la pression dans la chambre (120) de frein en fonction du paramètre de temps de réaction.

8. Unité (150) de commande configurée pour exécuter, commander ou effectuer, dans des unités (152, 154, 158) correspondantes, les stades d'un procédé (200 ; 300) suivant l'une des revendications précédentes.

9. Système (110) de frein d'un véhicule (100), dans lequel le système (110) de frein comprend :
une chambre (120) de frein ;
un modulateur (130) électronique de pression configuré pour moduler la pression dans la chambre (120) de frein ;
une électrovanne (140) pour la chambre (120) de frein ; et
une unité (150) de commande configurée pour exécuter, commander ou effectuer, dans des unités (152, 154, 158) correspondantes, les stades du procédé (300) suivant la revendication 7, dans lequel l'unité (150) de commande communique avec le modulateur (130) électronique de pression et avec l'électrovanne (140).
